# FASCICULE DE BREVET EUROPEEN

(11) **EP 0 537 040 B1**
(45) Date de publication et mention de la délivrance du brevet: **05.03.1997**
(21) Numéro de dépôt: 92402543.0
(22) Date de dépôt: 16.09.1992
(51) Int. Cl.: H04L 12/26

(54) **Système de test d'un réseau en forme d'anneau à trés haut débit et procédé de mise en oeuvre de ce système**
Verfahren und Vorrichtung zum Test eines ringförmigen Hochgeschwindigkeitsnetzwerkes
Apparatus and method to test ring-shaped, high-throughput network

(30) Priorité: 08.10.1991 FR 9112372
(43) Date de publication de la demande: 14.04.1993
(73) Titulaire: BULL S.A., 92800 Puteaux (FR)
(72) Inventeur: Urien, Pascal, F-78450 Villepreux (FR)
(74) Mandataire: Gouesmel, Daniel

(56) Documents cités:
- EP-A- 0 410 860
- DATA COMMUNICATIONS INTERNATIONAL vol. 19, no. 13, Octobre 1990, NEW YORK, N. Y., US pages 137 - 138 S. SAUNDERS 'Testing FDDI Networks, But at a Price'
- ELECTRONIC DESIGN vol. 38, no. 8, 26 Avril 1990, CLEVELAND, OH., US pages 95 - 105 K. PARKER 'Working with FDDI: A Designer's Guide'
- MILCOM 89 vol. 1, Octobre 1989, BOSTON, MA., US pages 794 - 798 A. C. WEAVER ET AL. 'A Real-Time Monitor for Token Ring Networks'

## Description

La présente invention concerne un système de test d'un réseau en forme d'anneau à très haut débit ainsi que le procédé de mise en oeuvre de ce système. Elle est plus particulièrement applicable aux réseaux de transmission de données de type FDDI, dont le support de transmission est constitué par des fibres optiques, ou encore aux réseaux de type TPDDI dont le support de transmission est constitué par une paire torsadée.

Les réseaux dont le support de transmission est constitué de fibres optiques, sont utilisés de plus en plus fréquemment et définis dans leurs grandes lignes dans les normes élaborées dans les comités de standardisation internationaux tels que l'ANSI (American National Standard institute), sous la référence X3T9-5. Ces mêmes normes sont également adoptées par l'I.S.O, Organisation Internationale de Normalisation (International Standard Organization). Elles sont également reprises dans la définition des réseaux de type TPDDI, qui ont tendance à être utilisés désormais dans les réseaux locaux où les distances de transmission entre les différentes stations ou terminaux sont relativement faibles.

On sait que sur un réseau, les messages d'informations émis par les différentes stations de celui-ci sont constitués par une pluralité de trames. On rappelle qu'une trame est constituée de données utiles encadrées, dans le temps, par des signaux placés en tête et en queue de trame. Ces derniers sont appelés "Caractères de commande".

Par ailleurs, on sait que l'ensemble des éléments constitutifs fonctionnels constituant un ordinateur (processeurs, mémoire vive et morte, contrôleur, etc... ) est disposé sur un ensemble de cartes (boards) dont les dimensions sont normalisées. Ces cartes sont reliées généralement à un même bus de type parallèle assurant les communications entre les différents éléments portés par les cartes, le transport des données entre celles-ci et leur alimentation électrique.

La connexion d'un tel ordinateur à un réseau FDDI ou encore TPDDI s'effectue par l'intermédiaire d'un dispositif passerelle de connexion dont la fonction est d'adapter les conditions de transmission des informations sur le bus d'ordinateur, aux conditions de transmission sur le réseau en question.

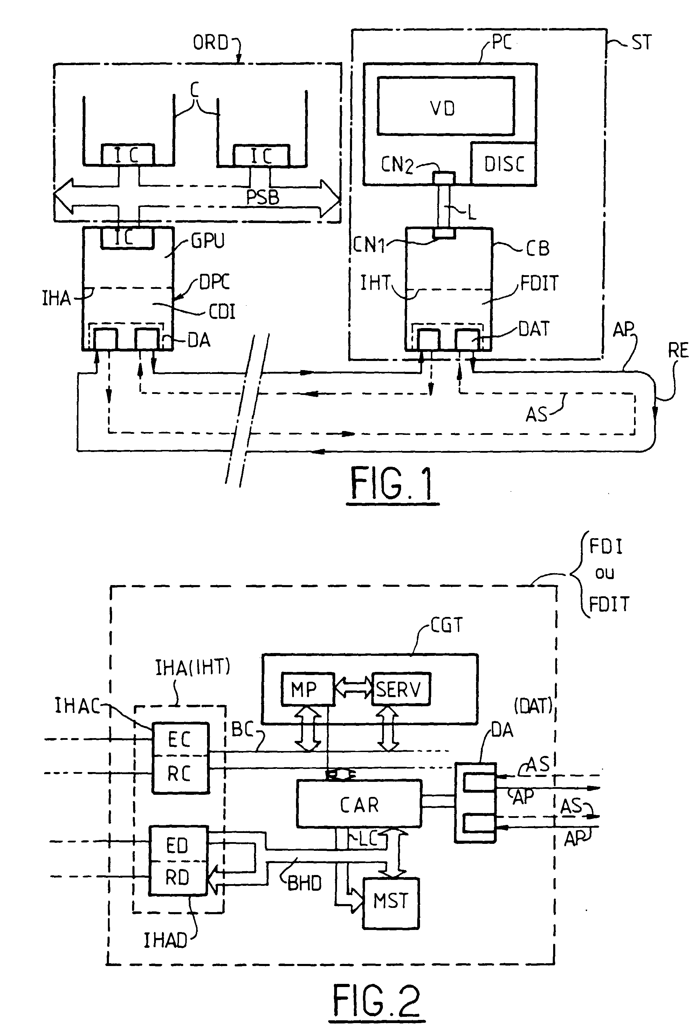

La Figure 1 montre la structure générale d'un tel dispositif passerelle.

Celle-ci montre un ordinateur ORD dont les différents éléments constitutifs sont disposés sur une pluralité de cartes C communicant entre elles par l'intermédiaire d'un bus PSB (sigle de l'expression anglaise Parallel System Bus). Chaque carte C est connectée à PSB par l'intermédiaire d'une interface de connexion IC. Le type d'interface de connexion et la façon dont elle communique avec les autres éléments constitutifs fonctionnels de l'ordinateur, dépendent du type de bus utilisé. Généralement le bus et l'interface de connexion sont définis de manière précise par des normes (Par exemple, normes relatives au bus MULTIBUSII, définies par la norme IEEE1296).

L'ordinateur ORD est connecté à un réseau RE, en forme d'anneau, par exemple de type FDDI (ou TPDDI), par l'intermédiaire du dispositif passerelle de connexion DPC. Le réseau RE se compose d'un anneau principal AP et d'un anneau secondaire AS.

Le dispositif DPC se compose d'une part d'un dispositif universel de couplage GPU (sigle anglais de General Purpose Unit), d'un dispositif adaptateur FDI, encore appelé coupleur de communication et d'une interface IHA assurant le transfert des informations entre le dispositif GPU et FDI.

Le dispositif universel de couplage GPU est relié à PSB par une interface de connexion IC, le plus souvent du même type que les interfaces IC précédemment décrites et appartenant aux cartes C.

Le dispositif DPC est relié physiquement au réseau RE par l'intermédiaire d'un dispositif d'accès physique au réseau, à savoir DA, appartenant au coupleur de communication FDI.

La structure générale du dispositif DPC, tel que montré à la figure 1, ainsi que des modes de réalisation et de fonctionnement des deux éléments le constituant, à savoir GPU et FDI sont décrits de façon détaillée dans le brevet européen n° 0 410 860.

Comme on le verra par la suite, le système de test ST selon l'invention est connecté au réseau RE par l'intermédiaire d'un coupleur de communication FDIT identique au coupleur de communication FDI du dispositif passerelle de connexion DPC. C'est la raison pour laquelle il est utile de rappeler quels sont les éléments constitutifs essentiels d'un tel coupleur de communication, étant entendu que la description plus détaillée de ce dernier ainsi que de son fonctionnement est effectuée dans la demande de brevet français ci-dessus mentionnée.

On considère à cet effet, la figure 2.

Le coupleur de communication FDI est connecté au dispositif universel de couplage GPU par l'intermédiaire de l'interface IHA, elle-même composée d'une interface IHAC pour les caractères de commande, et d'une interface IHAD pour les données proprement dites, encore appelées données utiles.

L'interface IHAC comprend une partie EC pour l'émission de caractères de commande et une partie RC pour la réception de caractères de commande des trames provenant du réseau.

L'interface IHAD comprend une partie ED pour l'émission de données utiles des trames destinée au réseau RE, et une partie réception, à savoir RD destinée à recevoir les données utiles des trames provenant du réseau RE.

Les éléments principaux de FDI sont les suivants :
- le contrôleur de gestion de transfert CGT construit autour d'un microprocesseur MP associé à un ensemble d'éléments de servitude SERV (mémoire de type RAM ou EPROM, coupleurs, etc...). Ce contrôleur de gestion est associé à un bus de commande BC auquel sont connectés les éléments MP et SERV, ainsi que l'interface IHAC.
- un contrôleur d'accès au réseau CAR, lui-même connecté d'une part au dispositif d'accès physique au réseau DA, et d'autre part au bus de commande BC.
- un bus haut débit BHD (pouvant véhiculer des trames avec des débits de l'ordre de 100 mégabits/sec.) connecté d'une part à l'interface IHAD et d'autre part au contrôleur d'accès au réseau CAR.
- une mémoire de stockage MST connectée respectivement au bus haute vitesse BHD, et au contrôleur d'accès au réseau CAR par l'intermédiaire d'une ligne de commande LC ( comportant notamment des fils de commande pour l'écriture et la lecture de la mémoire, ainsi que des informations d'adressage de celle-ci ).

On considère l'émission d'une trame déterminée depuis l'ordinateur ORD. Celle-ci ayant traversé le dispositif universelle de couplage GPU arrive sur l'interface IHAC, d'une part sous forme de données utiles qui sont envoyées à la partie ED de l'interface IHAD, et d'autre part de bloc de contrôle envoyés à la partie EC de l'interface IHAC. Ces blocs de contrôle comprennent d'une part des caractères de commande relatifs à la constitution de la trame en question, et d'autre part des informations concernant la nature des opérations à effectuer sur cette trame par le coupleur de communication FDI.

Le contrôleur de gestion CGT va lire les blocs de commande dans l'interface IHAC et interprète ceux-ci pour former des caractères de commande répondant à la norme FDDI, relatifs à la trame en question. Dès que ces caractères de commande sont constitués, ils sont envoyés à travers le bus BC, le contrôleur CAR et le bus BHD vers la mémoire de stockage MST. Pendant ce temps le microprocesseur MP gère le transfert des données utiles de la trame vers la mémoire de stockage MST. Dès que les caractères de commande et les données utiles sont parvenus dans celles-ci, le contrôleur d'accès au réseau CAR, sous le contrôle du microprocesseur MP expédie la trame ainsi formée vers le réseau RE.

Il est évident qu'un processus strictement inverse de celui qui vient d'être décrit ci-dessus se produit pour la réception d'une trame de type FDDI provenant du réseau RE.

L'existence des deux bus distincts BC d'une part pour les blocs de commande et BHD d'autre part pour les données utiles permet de transférer les blocs de contrôle sur le bus BC indépendamment des données utiles correspondantes sur le bus BHD, le bloc de contrôle pouvant être transféré sur son bus avant, en même temps, ou après que les données utiles correspondantes aient été transférés sur le bus BHD.

L'apparition récente des réseaux FDDI, ou encore TPDDI, nécessite de disposer d'outils de test fournissant aux concepteurs ou aux utilisateurs de ces réseaux un certain nombre de facilités :
- génération de trafic (génération de trames) : cette fonctionnalité est nécessaire pour la qualification de dispositifs particuliers, tels que des coupleurs de communication analogue à ceux montrés à la figure 2, ou le câblage de celui-ci ou encore l'ensemble des supports de transmission.
- visualisation du réseau : la norme FDDI permet, à partir d'une station quelconque, d'obtenir des informations sur l'état du réseau à un moment déterminé, ce dernier se caractérisant par le taux de charge du réseau, le taux d'erreurs, le nombre de trames en circulation, etc... Il est donc intéressant de visualiser sur un écran, l'état du réseau à partir de ces dernières informations.
- test de conformité : tout dispositif de type FDDI doit respecter la norme, c'est à dire offrir un certain nombre de services. Il est donc nécessaire de posséder un outil capable de vérifier l'existence et le bon fonctionnnement de tels services. Parmi ces derniers on relève notamment les trames dites SMT définies dans la norme FDDI.

On connaît des outils de tests répondant à ces caractéristiques. L'un d'eux est par exemple décrit dans l'article publié dans la revue DATA COMMUNICATIONS INTERNATIONAL, vol. 19, no. 13, Octobre 1990, N.Y., US, de SAUNDRES, ayant pour titre "testing FDDI Networks, but at a price". L'outil de tests en question est un analyseur de réseau relatif à un réseau FDDI qui copie des données qui circulent sur le réseau puis les stocke en vue de les analyser. Il ne se connecte pas sur le réseau et n'est donc pas interactif avec celui-ci et par suite reste passif vis-à-vis de ce dernier. Il ne peut pas générer de trames spécifiques et ne peut non plus en émettre ou réémettre vers celui-ci. Ces inconvénients sont évités par l'invention.

Le système de test selon l'invention permet de satisfaire aux exigences énoncées ci-dessus en étant construit autour d'un coupleur de communication analogue à celui de la figure 2 sur lequel sont implémentés (dans les éléments de servitude SERV) des tests fonctionnels (Génération et réception de trafic,...) et d'un mini ordinateur de type PC (Personal Computer) mettant en oeuvre un logiciel spécifique de test. Ce système de test permet à la fois de piloter tout coupleur de communication analogue à FDI (figure 2) connecté au réseau et de visualiser l'ensemble du réseau sur un écran appartenant à ce mini ordinateur.

Selon l'invention, le système de test (ST) d'un réseau (RE) en forme d'anneau à très haut débit, comprenant :
- une unité de traitement de données (PC) munie d'un dispositif de visualisation de celles-ci (VD) reliée par l'intermédiaire d'une liaison spécifique (L) à un coupleur de communication (FDIT) connecté au réseau,
- un logiciel de test du réseau (LOGT) implémenté dans ladite unité,
- un ensemble (ETF) de tests fonctionnels permettant au moins la réception de trames provenant du réseau,
- un coupleur de communication (FDIT) connecté à la liaison spécifique par l'intermédiaire d'une interface (IHT) et comprenant un microprocesseur (MP) qui met en oeuvre l'ensemble de tests fonctionnels (ETF) et est associé à un bus de commande (BC) lui-même connecté d'une part à l'interface (IHT), et d'autre part à un contrôleur d'accès au réseau (CAR) physiquement connecté au réseau,
- un bus haut débit (BHD) connecté d'une part à ladite interface (IHT) et d'autre part au contrôleur d'accès au réseau (CAR),
- une mémoire de stockage (MST) connectée respectivement au bus haut débit (BHD) et au contrôleur d'accès au réseau (CAR) par l'intermédiaire d'une ligne de commande (LC),
- le bus de commande transportant des caractères de commandes relatifs à la constitution des trames, le bus haut débit transportant les données utiles des trames correspondant aux caractères de commande, le microprocesseur organisant la réception et l'émission des trames provenant de ou allant vers le réseau,

Le logiciel de test (LOGT) pilotant d'une part le coupleur de communication en lui envoyant des commandes permettant la mise en oeuvre dudit ensemble de tests et d'autre part la visualisation des informations relatives à l'état du réseau, telles que reçues par le coupleur et envoyées par ce dernier à l'unité de traitement,
est caractérisé en ce que l'ensemble (ETF) de tests fonctionnels étant implanté dans le coupleur de communication permet, suite à l'envoi de commandes par l'unité de traitement de données (PC), la production de trafic sur le réseau (RE) par émission de trames de types prédéfinis conformes aux normes utilisées sur le dit réseau, la réception de trames de types prédéfinis provenant du réseau en vue de visualiser leur contenu sur le dit dispositif de visualisation, la réception et la réémission de trames de types préféfinis de façon ou non répétitive, l'interface (IHT) étant connectée à la ligne (L) par l'intermédiaire d'une carte-bouchon (CB) et d'une mémoire de commande (MC), la carte-bouchon comprenant des moyens (F1 à Fn, A1 à An) pour reboucler le bus haut débit (BHD) sur lui-même, de sorte que toute trame de données provenant du réseau soit renvoyée d'abord sur ce même bus puis dans la mémoire de stockage (MST), la mémoire (MC) permettant de faire la conversion entre le mode de transmission sur la ligne spécifique (L) et celui utilisé sur le bus haut débit (BHD).

D'autres caractéristiques et avantages de la présente apparaîtront dans la description suivante, donnée à titre d'exemple non limitatif et en se référant aux dessins annexés.

Sur ces dessins :
- la Figure 1 rappelle comment un ordinateur est connecté à un réseau par l'intermédiaire d'un coupleur de communication, et montre d'autre part comment s'insère le système de test selon l'invention à l'intérieur de ce réseau,
- la Figure 2 rappelle quels sont les éléments constitutifs essentiels d'un coupleur de communication tel que décrit dans la demande de brevet indiqué ci-dessus,
- la Figure 3 montre les éléments constitutifs essentiels du système de test selon l'invention,
- la Figure 4 montre comment le coupleur de communication du système de test est connecté à la liaison spécifique du mini ordinateur par l'intermédiaire d'une carte bouchon,
- la Figure 5 montre la structure générale du logiciel de test du système de test selon l'invention, implémentée sur le mini ordinateur.

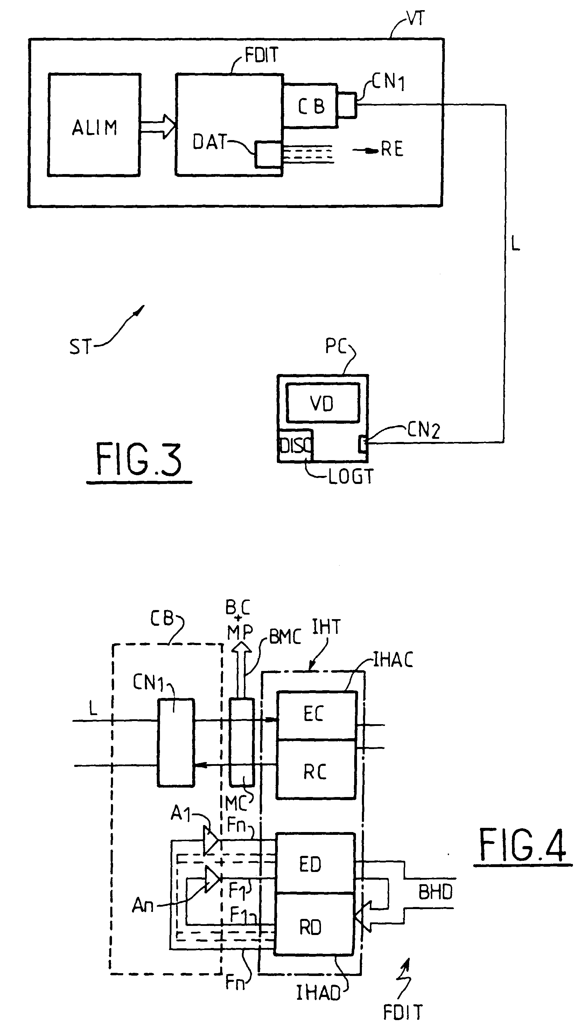

On considère les figures 1 et 3.

Le système de test ST, selon l'invention, montré à la figure 3 comprend une valise de test VT reliée par l'intermédiaire d'une liaison L spécifique à un mini ordinateur PC. Cette liaison est de type normalisé RS232. Elle est connectée au mini ordinateur PC par l'intermédiaire d'un connecteur CN2 normalisé et est connectée à la valise VT par l'intermédiaire d'un connecteur CN₁ de même type que CN₂.

Le mini ordinateur PC comprend notamment un écran de visualisation VD et une mémoire à disques DISC comprenant soit un disque dur soit un disque souple (Floppy disc) sur lequel est mémorisé de façon permanente le logiciel de test implémenté dans l'ordinateur PC. Ce dernier peut être constitué par n'importe quel type de mini ordinateur actuellement en vente sur le marché.

La valise de test VT comprend un coupleur de communication FDIT, de type tout à fait analogue à FDI (Figure 2) dont l'alimentation en énergie est fournie par une alimentation ALIM, et qui est connectée par l'intermédiaire d'un dispositif d'adaptation physique DAT, analogue à DA, au réseau RE.

Les servitudes SERV et FDIT contiennent un ensemble de tests fonctionnels ETF mis en oeuvre par le microprocesseur MP suite à l'envoi de commandes par le mini ordinateur PC (qui joue dans ce cas le rôle joué par GPU pour une carte FDI). Cet ensemble permet la génération de trafic sur RE par émission de trames prédéfinies conformes aux normes FDDI, (par exemple de type LLC, SMT, NIF, voir plu loint), la réception de trames de même type provenant de RE en vue de visualiser leur contenu, la réception et la réémission de ces mêmes trames en mode ECHO, telles que définies lors des test n° 3 et n° 4 expliqués en détail plus loin, etc...

On note que la figure 1 montre le schéma fonctionnel du système de test selon l'invention, alors que la figure 3 montre la disposition physique relative de chacun des éléments constituant le système de test.

Il convient de préciser que la valise de test VT a une forme de mallette parallélépipédique et est aisément transportable par un opérateur manuel.

Le coupleur de communication FDIT est connecté à la liaison L par l'intermédiaire d'un connecteur CN₁ porté lui-même par une carte bouchon CB..

La carte bouchon CB est connectée au coupleur de communication FDIT par l'intermédiaire d'une part de l'interface IHAD analogue à IHA, et d'autre part de la mémoire de commande MC et de l'interface IHAC (figure 4).

On considère la Figure 4, qui montre plus précisemment comment l'interface IHT est connectée à la carte bouchon CB. La carte bouchon CB permet de relier entre elles les parties ED et RD de IHAD par l'intermédiaire d'une pluralité de liaisons filaires F₁ à Fₙ et de circuit d'amplification et de remise en forme A₁ à Aₙ, les liaisons filaires F₁ à Fₙ étant connectées en série respectivement avec les circuits d'amplification A₁ à Aₙ. Ainsi, on reboucle la partie émission ED sur la partie RD, de sorte qu'une trame provenant du réseau RE arrivant par l'intermédiaire du bus BHD sur la partie RD est renvoyée sur la partie ED et donc sur le bus BHD vers la mémoire MST pour être ensuite réémise vers le réseau.

Le connecteur CN₁ est connecté à une mémoire de commande MC elle-même reliée d'une part à chacune des deux parties EC et RC de IHAC et d'autre part au bus de commande BC (et donc à MP) par un bus BMC. MC appartient à FDIT. De la sorte, le coupleur FDIT peut être couplé :
- soit, au mini-ordinateur PC, (par la carte bouchon CB) et dans ce cas faire partie intégrante du système de test ST. Dans ce cas, les blocs de commande envoyés depuis le mini-ordianteur PC par l'intermédiaire de L et CN₁, sont d'abord stockés dans MC avant d'être envoyés sur BC pour être ensuite analysés par MP. IHAC n'est alors pas utilisée. MC fait alors la conversion série-parallèle entre la liaison série L et le bus BC.
- soit, directement à GPU, en l'absence de carte-bouchon CB, et dans ce cas FDIT se comporte comme un coupleur de communication d'une station FDDI normale. IHA est alors connectée au bus de données de GPU et la mémoire MC au bus de commande de ce dernier. IHAC est alors utilisée et MC assure simplement le stockage provisoire des données avant leur transfert vers IHAC.

On supposera donc dans la suite du texte que FDIT appartient à ST.

Alors, le mini ordinateur PC et le coupleur de communication n'échangent entre eux que des blocs de commande et n'échangent aucune donnée utile.

Pour effectuer un test du réseau RE montré à la figure 1, il suffit d'insérer dans ce dernier, outre le système de test ST, un second système de test ST₁. Ainsi on peut vérifier que tout ce qui a été émis par l'un des deux systèmes de test, par exemple ST a bien été reçu par l'autre ST₁ et réciproquement. On peut éventuellement capturer une (ou plusieurs trames) pour examiner l'état de celle-ci. Pour effectuer un test valable, on charge le réseau à 100 % et on vérifie que l'ensemble des liaisons sont correctement effectuées, qu'il n'y a pas de problème de transmission optique s'il s'agit d'un réseau de type FDDI, que des stations particulières comportant des coupleurs de communication tels que FDI fonctionnent correctement, dans tous leurs composants, au moment du test.

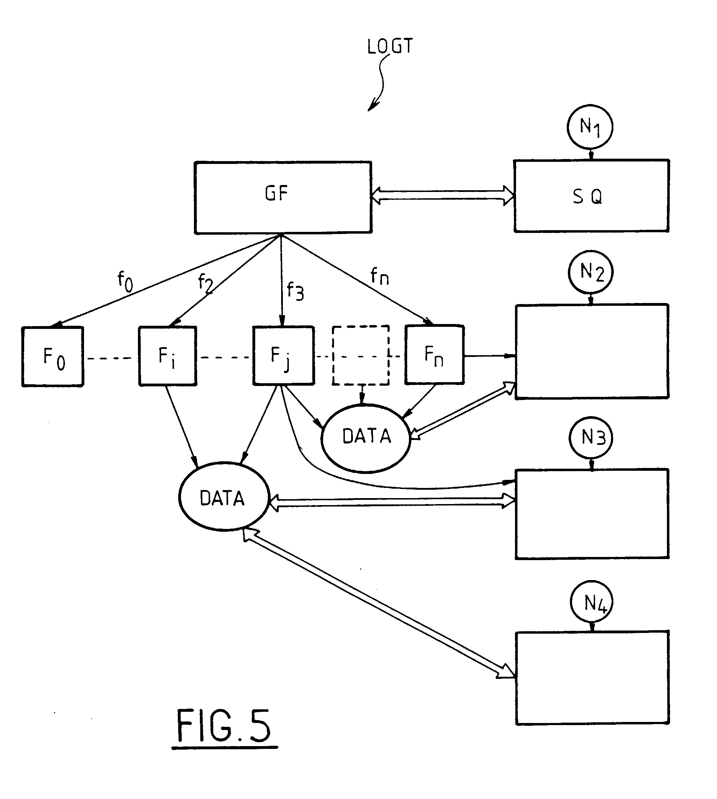

On considère la figure 5 qui permet de mieux comprendre la structure du programme de test mis en oeuvre par le mini ordinateur PC.

Ce programme, désigné par LOGT, s'articule autour d'un générateur de fenêtres GF, les fenêtres qu'il engendre étant désignées par F₁ à Fₙ. Le fait que GF engendre les fenêtres F₁ à Fₙ est symbolisé par l'ensemble de flèches F₁ à Fₙ qui le relie aux fenêtres correspondantes.

Par ailleurs, le logiciel LOGT comporte 4 niveaux N₁ à N₄.

Le premier niveau N₁ définit le squelette SQ du programme : ce squelette permet notamment le dimensionnement des fenêtres, de définir leurs arborescences, c'est à dire la façon dont celles-ci peuvent s'enchaîner les unes aux autres, et définit les appels de procédure. C'est à ce premier niveau N₁ que fait appel le générateur de fenêtres GF pour construire les différentes fenêtres F₁ à Fₙ. Elles se construisent à partir d'un menu racine inclus dans ce squelette.

Le deuxième niveau N₂ décrit les différentes commandes susceptibles d'être envoyées à tous les coupleurs de communication de type FDI ainsi qu'à toute carte FDIT d'un quelconque système de test ST connecté au réseau RE. Ce deuxième niveau décrit également la structure des réponses reçues à ces différentes commandes, ces réponses reçues concernant notamment l'affichage des status des différents éléments composant une carte FDI, l'état des différents compteurs qui y sont inclus,etc....

Le troisième niveau N₃ exécute des fonctions prédéfinies : ces fonctions permettent notamment la visualisation de l'ensemble de l'anneau formant le réseau RE, ainsi que la visualisation de ce qui se passe à l'intérieur de tout coupleur de communication d'une station connectée à cet anneau.

Le dernier niveau N₄ permet une programmation rapide de la carte FDIT du système de test ST.

Dans l'exemple de réalisation décrit ici, il existe 40 fenêtres possible numérotées de 0 à 39, c'est à dire les fenêtres F₀ à F₃₉. Chaque fenêtre possède au maximum 23 champs C₀ à C₂₂, chaque champ étant identifié par un libellé de largeur maximale 19 caractères.

3 types d'actions sont associées à un champ donné d'une fenêtre :
1. l'appel d'une autre fenêtre, qui est alors identifiée par son numéro (de 1 à 39, le chiffre 0 signifiant par convention que cette fenêtre ne définit pas une action déterminée, la fenêtre 0 comportant en fait le menu racine du logiciel de test LOGT ).
2. l'appel d'une fonction identifiée par un indice (dans l'exemple de réalisation décrit ici, cet indice est supérieur à 1000). Cette fonction est mise en oeuvre par un programme particulier (du niveau N₃).
3. la définition d'une donnée, de largeur maximale 9 caractères. La largeur est alors définie par un indice compris entre -1 et -9 (-1 correspond à une largeur d'un caractère et -9 à une largeur de 9 caractères). On sait qu'on entend par caractère, pour un écran d'ordinateur, soit une lettre, soit un chiffre, soit une ponctuation ou un signe. A chaque caractère correspond une combinaison connue d'un nombre déterminé de bits (8 par exemple).

Sur l'écran du mini ordinateur la position du coin supérieur gauche d'une fenêtre est définie par deux coordonnées X0 et Y0 où X0 est compris en 0 et 79 et Y0 entre 0 et 24. Si X0 et Y0 sont égaux à -1, la position de la fenêtre sur ce même écran est gérée par le logiciel LOGT : cela signifie que, si une fenêtre en appelle une autre, LOGT essaie de placer cette dernière au voisinage de la première de manière à ce que la présentation de celles-ci sur l'écran apparaisse de façon simple et claire aux yeux de l'opérateur humain travaillant sur ce dernier.

Le tableau 1 donné en annexe représente l'écran du mini ordinateur PC présentant la définition d'une fenêtre au moyen d'une fonction appelée BUILD. La définition de la fenêtre dont il s'agit à savoir la fenêtre de numéro 10, c'est à dire la fenêtre F₁₀ est effectuée au moyen d'une part de la fenêtre F₀ faisant appel au menu racine de LOGT et d'autre part des trois fenêtres F₁,F₂,F₃ faisant toutes appel à la fonction BUILD en vue de définir la fenêtre en question, en précisant son format et en la décrivant par indication notamment du nombre de champs, de leur largeur, etc...

La fenêtre F₃ peut également faire appel à la fonction COPY (voir plus loin). En fait, chacune des fenêtres F₁ à F₃ peut être reprogrammée à tout moment par la fonction Build, en redéfinissant sa longueur, le nombre de champs, leur largeur, etc...

Ainsi si l'on se réfère au tableau 1 ci-dessus indiqué, on voit que l'on cherche à construire au moyen de la fonction BUILD la fenêtre N° 10 (indiqué par le libellé numéro-fenêtre au tableau 1), dont le nombre de champs est égal à 10 (libellé NBR DE CHAMP), dont la largeur est de 10 caractères chacun (libellé LARGEUR), le positionnement de la fenêtre étant géré par le logiciel (libellé X0 - Y0 égaux à -1). Le champ dont le libellé est "EXEC" appelle la fonction d'indice 1100 (voir la partie supérieure droite du tableau 1), le champ de libellé "FORMAT" appelle la fenêtre F₃₀ alors que le champ libellé "FAMILLE" est associé à une donnée large de 4 caractères. Tous les champs dont le libellé figure dans la partie supérieure droite du tableau 1 ont également une largeur de 4 caractères.

Il existe encore d'autres fonctions qui relèvent du niveau N₁. Ce sont les fonctions dont le libellé est le suivant "SAUVE ET LIT", "COPY", "BOOT". La première de celles-ci permet de charger ou de sauver une configuration de l'ensemble du logiciel de test LOGT à un moment donné, c'est à dire l'ensemble de 40 fenêtres disponibles dans une mémoire spéciale de PC, cette mémoire étant par exemple de type RAM. La deuxième de celles-ci permet de recopier une fenêtre source vers une fenêtre destination, les fenêtres étant identifiées par leurs numéros. Cette fonction permet donc par exemple de recopier dans la fenêtre destination F₃₅ la fenêtre source F₂₅. La troisième et dernière de celles-ci permet de créer ou de modifier un fichier particulier contenant le nom d'un fichier de configuration chargé lors de l'exécution du logiciel LOGT : on mémorise ainsi le contenu des 40 fenêtres à un moment donné. Si on relance le programme, on obtient alors la configuration que l'on avait quand on en est sorti.

On considère désormais le niveau N₂ concernant l'envoi de commandes à la carte FDIT et l'affichage des réponses correspondant à ces commandes : ce mode de fonctionnement permet de transmettre à la carte FDIT, par l'intermédiaire de la liaison RS232, une commande, puis de visualiser sur l'écran du mini ordinateur la réponse obtenue.

Pour créer et exécuter une commande déterminée, 3 fenêtres sont nécessaires :
a) la fenêtre du "CORPS DE COMMANDE" contient le message de commande destiné à être envoyé à la carte FDIT (on sait que PC et FDIT n'échangent que des messages de commande). Ce type de fenêtre, dans l'exemple de réalisation décrit ici, a un numéro compris entre 10 et 18.
b) la fenêtre "CHAMP " indique le nombre de champs de la réponse attendue. Elle est l'une des fenêtres F₂₀ à F₂₈.
c) la fenêtre "FORMAT" décrit le format d'affichage des différents champs de la réponse, format d'affichage sur l'écran du mini ordinateur. Cette fenêtre est l'une des fenêtres F₃₀ à F₃₈.

La fenêtre "CORPS DE COMMANDE" contient donc, ainsi qu'il a été dit plus haut, un message de commande. Ce dernier est écrit sous forme de mots de 16 bits, codés en hexadécimal. L'octet de poids fort associé au champ "HEADER", représente le code de la commande, l'octet de poids faible indiquant sa longueur (celle-ci est exprimé en octets). Le mot de 16 bits correspondant au champ "HEADER" est placé en tête du message. Derrière le champ "HEADER" se trouve d'autres champs dans lesquels se trouve les autres données de la commande, un libellé rappelant leur interprétation, pour chaque champ se situant derrière le champ "HEADER".

La fenêtre "CHAMP" décrit la structure d'une réponse et indique le nombre de champs de la réponse ainsi que la taille de chaque champ exprimé en octets, les valeurs licite étant, dans l'exemple de réalisation décrit ici, égales à 1,2,4.

La fenêtre "FORMAT" décrit le format d'affichage d'un champ de réponse et du libellé associé. Le codage du format est identique à celui de la fonction bien connu du langage C, à savoir "printf". Le format d'affichage est donc un format utilisé habituellement dans les mini ordinateurs.

Les commandes usuelles sont, dans l'exemple de réalisation décrit ici, les suivantes :

la commande de connexion, encore appelée commande "CONNECT" permet d'insérer la carte FDIT dans le réseau RE, un champ particulier définissant le mode de fonctionnement de la carte.

La commande de déconnexion "DECONNECT" permet la déconnexion de la carte FDIT du réseau RE. De ce fait, elle annule les effets de la commande de connexion.

La commande "SEND-FRAME" provoque l'envoi d'une trame de type SMT, ce type de trame étant défini dans la norme ANSI précitée. La définition des trames SMT constitue en fait un sous-ensemble de la norme FDDI définie par l'ANSI. Cette trame est envoyée par FDIT sur le réseau et est récupérée par la carte correspondante du système de test ST₁ qui émet une trame réponse de type SMT. La trame réponse est affichée sur l'écran sous forme hexadécimale. Cette commande est utilisée lors des tests d'interopérabilité du réseau RE.

La commande d'initialisation "INIT-PTCOL" permet d'initialiser les paramètres du niveau MAC (qui signifie médium Access Control), ce dernier étant défini dans la norme FDDI. Ces paramètres sont notamment la valeur minimum du temps de rotation sur l'anneau (Target Token Rotation Time) dont le sigle est TTRT qui est défini par la norme et est inférieur à 4 millisecondes. Cette même commande définit également la valeur maximum de ce même TTRT qui doit être inférieur à 165 millisecondes. Cette commande définit également, lors de l'initialisation du niveau MAC, la valeur souhaitée du temps de rotation du jeton sur l'anneau, cette valeur devant être comprise entre la valeur minimum et la valeur maximum du TTRT. D'autres paramètres de ce type sont des paramètres définissant, s'il y a ou non priorité affectée au trafic asynchrone, si la carte FDIT doit recevoir toutes les trames ou les trames valides uniquement, si l'on opère en mode adresse longue ou en mode adresse courte (ces deux modes sont également définis par la norme FDDI). Ce sont également l'adresse de groupe courte de la station si l'on opère en mode adresse courte, l'adresse courte de la station, l'adresse longue de la station si l'on opère en mode adresse longue.

La commande "SET-VALUE" permet de modifier un paramètre de type SMT de la carte FDIT ou de toute autre carte FDI d'une quelconque station du réseau RE. Cette commande est exécutée en deux temps :
a) par une demande d'un identificateur de transaction à la station concernée par cette modification de paramètres,
b) par un envoi de la nouvelle valeur du paramètre à la station concernée, par l'intermédiaire d'une trame spéciale spécifiée dans la norme FDDI.

A la fin de cette opération en deux temps énoncée ci-dessus , un paramètre également spécifié dans la norme est affiché et rend compte du succès ou de l'échec de l'opération. Toute la procédure indiquée ci-dessus (procédure en deux temps) est conforme avec la norme SMT6.2 de la norme FDDI.

La commande "RESET" entraîne la remise à zéro, en cours de fonctionnement, de la carte FDIT ou de toute autre carte FDI d'une station connectée au réseau RE, sans avoir à exécuter de nouveau toutes les opérations de type BIST (BUILD-IN SELF-TEST) connues dans la pratique courante et qui ont trait à l'initialisation de tous les composants d'une carte donnée, ici les cartes FDIT ou FDI.

La commande "STATUS" permet d'obtenir des informations sur l'état de la carte FDIT ou de toute carte FDI connectées au réseau, à un instant déterminé. Ces informations peuvent concerner par exemple le nombre d'octets reçus ou émis par seconde, l'état de certains automates définis dans la norme FDDI et qui sont toujours présents sur des coupleurs de communication, ces automates étant par exemple de type CFM, PCMB, PCMA. De l'état de ces automates, on peut déduire un certain nombre d'informations sur l'état de la carte correspondante par exemple si les deux attaches de la carte au réseau RE sont actives ou non. On peut également avoir des informations sur les status des composants formant les éléments CAR et DA des cartes FDI ou FDIT de la figure 2, et plus précisément des composants dénommés CMS,CCD,FORMAC dont le rôle est défini de manière précise dans la demande de brevet français précitée, sous la même appellation.

La commande "SET-TEST" est destinée à placer soit la carte FDIT, soit toutes autres cartes FDI dans différentes configurations de test. Il existe 5 types de test, les tests 1 à 4 étant de type fonctionnel, c'est à dire vérifiant le bon fonctionnement de la carte, le test 5 étant de type opérationnel, plus spécifiquement consacré à la génération de trafic sur l'anneau RE.

Ces différents modes de test sont les suivants :
- test N°1 : ce test est le test récepteur et permet de vérifier le bon fonctionnement d'une carte FDI (ou même FDIT) pour la réception de trames de type LLC (définie par la norme FDDI). Ces trames sont constituées en fait de données à transporter et constituent les trames couramment utilisées sur le réseau. Pour ce test, la carte FDIT envoie donc une trame ou plusieurs trames de type LLC sur le réseau RE et on vérifie si la carte FDIT du second système de test connectée au réseau, à savoir le système ST₁, reçoit correctement ces trames. On peut vérifier également par ce test que toute autre carte FDI reçoit correctement les trames envoyées par la première carte FDIT.
- test n° 2 : Il s'agit du test permettant de vérifier le fonctionnement en émetteur de toutes les cartes FDI (ou FDIT). La carte FDI testée envoie alors des trames de longueur déterminée. Celles-ci sont envoyées sous forme de plusieurs blocs de trames transmis à un intervalle de temps déterminé. Ces trames peuvent être soient des trames LLC de type asynchrone ou synchrone, à adresse courte ou à adresse longue. Une fois qu'elles ont été envoyées par la carte dont on cherche à vérifier le fonctionnement à l'émission, on vérifie par l'intermédiaire de la carte FDIT du système de test ST qu'elles sont correctes, étant entendu que la carte FDIT est en état de bon fonctionnement, ainsi que l'ensemble du support de transmission du réseau.
- test n°3 : ce test permet de vérifier le bon fonctionnement d'une carte FDI (ou FDIT) quelconque. Il est encore appelé test répéteur local. Il fonctionne en particulier lorsque les transceivers optiques de la carte contenus dans le dispositif d'adaptation physique DA (voir figure 2) sont rebouclés sur eux-mêmes avec une longueur de fibre supérieure à 1 km. Pour effectuer ce test, une trame de type asynchrone, en adresse courte, est adressée par ST (et donc en fait par FDIT),à la carte FDI de la station sous test. Cette trame envoyée à FDI est répétée par celle-ci grâce à la carte bouchon, et renvoyée sur le réseau où la carte FDIT vérifie le bon état de la trame ainsi renvoyée. Dans ce test particulier, la longueur du champ de données de la trame est de 8 octets. Ce test est donc initialisé par ST.
- test n°4 : Il s'agit d'un test dit répéteur, qui fait réémettre toutes les trames (sauf les trames de type SMT) adressées à la carte FDI sous test par celle-ci, vers les stations qui les ont émises. Ce test n'est pas initialisé et ne peut avoir lieu que si des trames sont émises sur RE par une (ou plusieurs) stations quelconques.
- test n°5 : ce test est dit test opérationnel et est destiné à l'utilisation de la carte FDIT en tant que générateur de trafic sur le réseau et/ou en temps qu'administrateur de réseau.

Pour l'ensemble de ces tests 1 à 5, il est nécessaire de définir un certain nombre de paramètres qui seront contenus dans les champs des fenêtres appelant ces différents tests : parmi ceux-ci on peut relever l'adresse courte de destination (16 bits pour les trames émises lors des tests 2 et 5), un paramètre permettant d'autoriser ou d'inhiber l'émission de trames de test, ce dernier paramètre permettant de relever les valeurs de compteur contenus dans les cartes FDI (dans les servitudes SERV) lors d'un test entre deux stations connectées au réseau, un paramètre de parité, un paramètre définissant la taille des trames émises en octets, (pour les tests 2 et 5), la valeur de la quantité Fc (Frame control qui fait partie des caractères de commande) pour les trames émises lors des tests 2 et 5, un paramètre définissant la profondeur des FIFO utilisés en mots de 32 bits pour les mémoires FIFO constituant les interfaces IHAC, IHAD (voir figure 2), un paramètre indiquant si la station sous test est une station à simple attache ou à double attache sur le réseau, un paramètre définissant la fréquence d'émission des trames NIF, exprimée en seconde, ces trames NIF étant également définies dans la norme FDDI. Ce dernier paramètre régit directement le temps nécessaire pour acquérir la nouvelle configuration du réseau, lors d'une connexion de station par exemple. D'autres paramètres sont encore nécessaires, par exemple l'adresse longue de destination des trames émises lors des tests 2 et 5, le délai d'attente entre l'émission de blocs de trames compris entre 0 et 2 secondes, et le nombre de trames qui peuvent être émises en "rafale" lors des tests 2 et 5.

La commande "COLLECT-MA" permet de rassembler les données contenues dans un ensemble de compteurs du niveau "médium Access Control". Ces compteurs font partie des servitudes SERV du contrôleur CGT montré à la figure 2. On peut ainsi recueillir des données concernant le nombre total de trames sur l'anneau, le nombre de trames perdues, le nombre de trames en erreur, le nombre de trames émises et reçues par le destinataire sans qu'il n'y ait d'erreur, le nombre de trames émises mais présentant des problèmes (destinataire absent, par exemple) le nombre de trames émises mais non reconnues par leurs destinataires, le nombre de trames émises et vues sur l'anneau avec une erreur FCS, le nombre de trames reçues avec ou sans erreur, le nombre de trames émises et non copiées par le destinataire, le nombre de trames reçues avec des erreurs FCS, le nombre de trames reçues dont l'adresse a été reconnue par d'autres stations, etc... (FCS = Frame Check Sequence, défini par la norme FDDI, ensemble de bits placés en fin de trame pour la détection d'erreur).

La commande "GET-VALUE" permet d'obtenir la valeur d'un paramètre ou d'un groupe de paramètres. Elle peut être destinée soit à une carte FDIT soit à toute autre carte FDI d'une station connectée à l'anneau. Dans ce cas la commande est envoyée sous forme d'une trame de type SMT (suivant la norme SMT6.2).

Les commandes "GET-VALUE" et "SET-VALUE" sont exécutables sur une station quelconque du réseau, que le coupleur de communication soit du type de la carte FDI montré à la figure 2 et décrit dans la demande de brevet précitée, du type de la carte FDIT ou encore un coupleur de communication de type quelconque. En effet ces commandes sont conformes à la norme FDDI.

Par contre, les commandes tel les que "RESET", "STATUS", "COLLECT-MA" sont envoyées sur le réseau sous forme de trames SMT et sont ignorées par des coupleurs de communication autres que FDI. Elles sont donc destinées uniquement aux tests des cartes FDI.

Les commandes "CONNECT", "DECONNECT", "INIT", "PTCOL" sont exécutables uniquement sur la carte FDIT. Il convient de mentionner que ces dernières commandes sont codées avec un champ adresse de destination égal à zéro. Les commandes spéciales mentionnées ci-dessus sont codées avec un champ adresse de destination égal à zéro si elles sont adressées à la station FDIT du système de test, ou égal à l'adresse du destinataire dans le cas contraire (autre carte FDI).

Pour connecter une carte FDI que l'on cherche à tester, il est nécessaire, après la mise sous tension de la carte, d'exécuter les fonctions suivantes :
- "INIT-PTCOL" : pour initialiser les paramètres MAC de la carte,
- "SET-TEST" : pour la sélection d'un test particulier, l'un des tests 1 à 5,
- "CONNECT" : pour la connexion de la carte en question à l'anneau RE.

Toutes modifications du test (passer d'un test à l'autre) implique la déconnexion préalable de la station du réseau, par l'intermédiaire de la commande "DECONNECT". Après sélection du test que l'on cherche à mettre en oeuvre (par la commande "SET-TEST") la commande "CONNECT" insère de nouveau la carte sur l'anneau.

En cas d'erreur dans les opérations de test, ou sur la carte, la commande "RESET" effectue la réinitialisation du coupleur de communication FDI. Il est alors nécessaire d'effectuer dans l'ordre les trois commandes énoncées ci-dessus pour connecter à nouveau la carte au réseau RE.

Une fonction particulière dénommée "AUTOEXEC" qui est en fait une commande particulière, permet d'exécuter de façon répétitive une série de commandes (3 commandes au maximum). Par exemple, on peut l'utiliser pour connecter et déconnecter périodiquement une station au réseau lors de test de reconfiguration. Un champ particulier définit alors l'intervalle de temps séparant l'envoi de deux commandes successives. La valeur minimale de ce champ est zéro, la valeur maximale de 20 correspondant à 1 seconde de temps. On sélectionne les commandes en mettant à la valeur 1 le champ donné associé au nom de la dite commande.

Ainsi qu'on l'a vu plus haut, le niveau N₃ contient un certain nombre de fonctions prédéfinies. Ces fonctions répondent à deux types de besoins :
- d'une part, la visualisation de l'activité d'une carte FDI (configuration, taux de charge, taux d'erreur,etc.. ),
- d'autre part, la visualisation de l'activité du réseau et en particulier d'une station de type FDDI quelconque au moyen de méthodes strictement conformes à la norme FDDI.

Ces fonctions permettent d'accéder par l'intermédiaire de la carte FDIT à toutes les stations du réseau, soit de type FDI ou autre.

Les principales sont les suivantes :

La fonction "BUILD-MAP" permet d'acquérir la liste des adresses MAC des stations du réseau, et les mémorise de façon permanente. Cette liste d'adresses est par la suite utilisée par les autres fonctions pour sélectionner une station cible déterminée. Ces adresses MAC sont obtenues par l'intermédiaire de trames de type NIF. Pendant ce processus d'obtention, une fenêtre particulière visualise l'adresse de la station interrogée (station cible) et le paramètre recherché (adresse de la station voisine). Cette fonction permet de faire le tour de l'anneau, en cherchant tout à tour l'adresse des stations voisines, par approches successives.
- la fonction "VOIR-STAT" permet de visualiser l'état d'une carte FDI, et utilise des paramètres qui n'existent pas dans la norme FDDI. Elle est donc strictement réservée aux coupleurs de type FDI. La liste, non exhaustive des paramètres affichés peut être la suivante :
- configuration : indique l'état de la station (non FDDI), c'est à dire si la station comporte 1 ou 2 attaches actives ou pas du tout.
- charge de la station à l'émission et en réception en mégabytes /Sec. ( non FDDI ),
- nombre de trames émises et reçues, nombre de trames non copiées, nombre de trames sur l'anneau, nombre de trames en erreur, nombre de trames perdues, contenu des compteurs d'erreur sur les récepteurs optiques, contenu des compteurs d'erreur des buffers de réception optiques, (tous les paramètres énoncés ci-dessus étant définis par la norme FDDI), contenu des compteurs d'erreur relatif à la réception de trames (non FDDI), nombre de fois où l'anneau est devenu opérationnel, nombre d'expiration du compteur de jetons (norme FDDI). Les compteurs de jetons, les compteurs d'erreur sont contenus dans les servitudes SERV du contrôleur CGT (figure 2).

La fonction "STD-VIEW" : cette fonction visualise une station au moyen d'informations obtenues à partir de trames dites "SIF-O" et "SIF-C" conformes à la norme SMT6.2.

La fonction "SIF-CONFIG" et la fonction "SIF-OPER" permettent respectivement de visualiser le contenu soit d'une trame SIF dite trame configuration, soit d'une trame SIF dite opération, ces trames étant conformes aux normes SMT5.1 à 6.2. Elles sont principalement utilisées lors de tests d'interopérabilité.

La fonction "VOIR RING" fabrique une image de l'anneau double à partir de trames NIF, SIF-O et SIF-C conformes à la norme FDDI. L'image de l'anneau ainsi fabriqué comporte 15 stations au maximum. La configuration de la station est représentée sous forme graphique, en visualisant l'anneau primaire d'une couleur déterminée, et l'anneau secondaire d'une autre couleur (par exemple, respectivement vert et rouge) des champs particuliers appelés Tx et Rx indiquant le nombre de trames émises et reçues par seconde par la station. Ces informations sont rafraîchies de façon périodique, ce qui permet de détecter en temps réel les reconfigurations. Il existe également d'autres fonctions permettant par exemple la réception et la visualisation d'images émises par une station quelconque de type FDI, de réinitialiser la liaison série RS232 du côté de la carte FDIT, d'acquérir de façon périodique un ou plusieurs paramètres SMT permettant de présenter les valeurs recueillies sous forme graphique sur l'écran VD de l'ordinateur PC.

La fonction "CATCH" permet de faire lire par FDIT, une trame reçue par une carte FDI quelconque. Elle s'exécute en deux temps :
a) initialisation des paramètres de capture de la trame : pour ce premier temps, il est nécessaire de connaître les paramètres suivants, l'adresse du destinataire de la commande, la valeur Fc de la trame capturée, l'adresse de la station source de la trame capturée.
b) lecture de la mémoire tampon de capture de la carte FDIT. Après lecture, le mode capture est automatiquement réarmé avec les paramètres préalablement définis par la commande d'initialisation, voir a) ci-dessus.

Si aucune trame n'est capturée, un message indiquant qu'aucune trame n'est capturée est affiché sur l'écran.

La mémoire tampon de capture peut mémoriser jusqu'à 128 octets de donnée. Lorsque le champ de donnée de la trame capturée excède cette taille, un message indiquant que la trame capturée est incomplète est affiché sur l'écran. La lecture de la mémoire tampon de capture permet d'observer, les drapeaux (flags) EAC, (selon la norme FDDI) de la trame reçue, la longueur de celle-ci depuis le caractère Fc jusqu'à FCS inclus, l'adresse de destination de la trame, l'adresse de source de la trame et évidemment les données utiles de celle-ci depuis l'adresse de source jusqu'au caractère de fin de trame FCS inclus.

Il existe encore une fonction appartenant au niveau N₃ permettant de visualiser une station ainsi que ses voisines physiques. Cette fonction est appelée fonction topologie.

Le niveau N₄ est appelé mode rapide ou encore mode "FAST" et permet une programmation rapide de la carte FDIT. Ce mode permet, d'utiliser toutes les fonctions du niveau N₃ et en plus une initialisation extrêmement rapide de cette carte, au moyen du clavier du mini ordinateur. L'utilisateur peut modifier des paramètres à son gré. Les paramètres ainsi modifiés sont mémorisés dans des fenêtres correspondant aux fonctions du niveau N₂, ce qui permet de sauvegarder la configuration souhaitée (avant la modification des paramètres par l'utilisateur) dans un fichier approprié.

Un certain nombre de touches sur le clavier, appelées touches de direction permet de présélectionner la fonction désirée. Une autre touche active la fonction choisie, alors qu'une troisième touche permet de quitter une fonction au moment où on le désire.

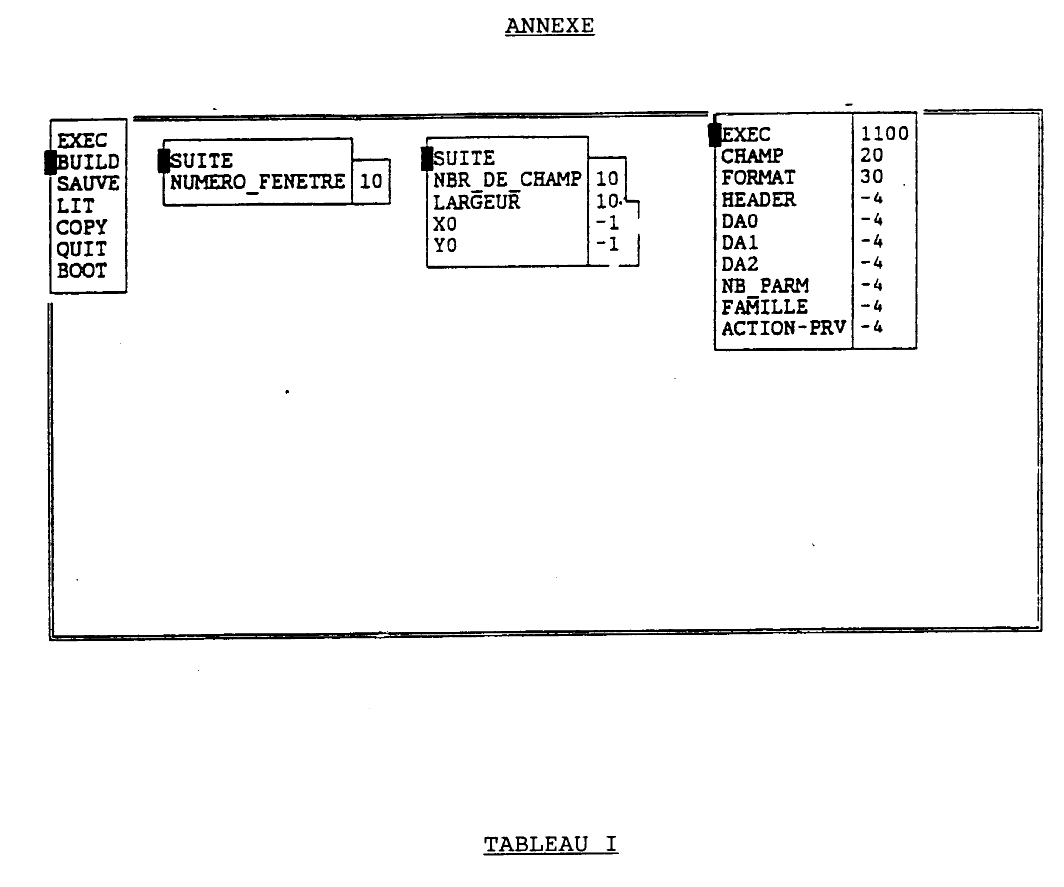

## Revendications

1. Système de test (ST) d'un réseau (RE) en forme d'anneau à très haut débit, comprenant :
- une unité de traitement de données (PC) munie d'un dispositif de visualisation de celles-ci (VD) reliée par l'intermédiaire d'une liaison spécifique (L) à un coupleur de communication (FDIT) connecté au réseau,
- un logiciel de test du réseau (LOGT) implémenté dans ladite unité,
- un ensemble (ETF) de tests fonctionnels permettant au moins la réception de trames provenant du réseau,
- un coupleur de communication (FDIT) connecté à la liaison spécifique par l'intermédiaire d'une interface (IHT) et comprenant un microprocesseur (MP) qui met en oeuvre l'ensemble de tests fonctionnels (ETF) et est associé à un bus de commande (BC) lui-même connecté d'une part à l'interface (IHT), et d'autre part à un contrôleur d'accès au réseau (CAR) physiquement connecté au réseau,
- un bus haut débit (BHD) connecté d'une part à ladite interface (IHT) et d'autre part au contrôleur d'accès au réseau (CAR),
- une mémoire de stockage (MST) connectée respectivement au bus haut débit (BHD) et au contrôleur d'accès au réseau (CAR) par l'intermédiaire d'une ligne de commande (LC),
- le bus de commande transportant des caractères de commandes relatifs à la constitution des trames, le bus haut débit transportant les données utiles des trames correspondant aux caractères de commande, le microprocesseur organisant la réception et l'émission des trames provenant de ou allant vers le réseau,
le logiciel de test (LOGT) pilotant d'une part le coupleur de communication en lui envoyant des commandes permettant la mise en oeuvre dudit ensemble de tests et d'autre part la visualisation des informations relatives à l'état du réseau, telles que reçues par le coupleur et envoyées par ce dernier à l'unité de traitement,
caractérisé en ce que l'ensemble (ETF) de tests fonctionnels étant implanté dans le coupleur de communication permet, suite à l'envoi de commandes par l'unité de traitement de données (PC), la production de trafic sur le réseau (RE) par émission de trames de types prédéfinis conformes aux normes utilisées sur le dit réseau, la réception de trames de types prédéfinis provenant du réseau en vue de visualiser leur contenu sur le dit dispositif de visualisation, la réception et la réémission de trames de types préféfinis de façon ou non répétitive,
- l'interface (IHT) étant connectée à la ligne (L) par l'intermédiaire d'une carte-bouchon (CB) et d'une mémoire de commande (MC), la carte-bouchon comprenant des moyens (F1 à Fn, A1 à An) pour reboucler le bus haut débit (BHD) sur lui-même, de sorte que toute trame de données provenant du réseau soit renvoyée d'abord sur ce même bus puis dans la mémoire de stockage (MST), la mémoire (MC) permettant de faire la conversion entre le mode de transmission sur la ligne spécifique (L) et celui utilisé sur le bus haut débit (BHD).

2. Système selon l'une des revendications 1, caractérisé en ce que le logiciel de test du réseau (LOGT) s'articule autour d'un générateur de fenêtres (GF) engendrant une pluralité n de fenêtres F₁ à Fₙ, et comporte au moins 3 niveaux N₁ à N₃,
le premier niveau N₁ définissant le squelette (SQ) du programme permettant notamment de construire les différentes fenêtres,
Le deuxième niveau N₂ décrivant les différentes commandes susceptibles d'être envoyées par l'unité de traitement de données (PC) ou par toute autre station du réseau, aux autres stations du réseau, et d'autre part la structure des réponses reçues à ces différentes commandes,
le troisième niveau N₃ exécutant des fonctions prédéfinies permettant notamment la visualisation sur le dit dispositif de visualisation de l'ensemble du réseau RE, ainsi que la visualisation de ce qui se passe à l'intérieur de tout coupleur de communication appartenant à une station connectée à ce réseau.

3. Système de test (ST) selon l'une des revendications 1, 2, caractérisé en ce que le réseau (RE) est en forme de double anneau de type FDDI (Fibber Distributed Data Interface).

4. Système de test (ST) selon la revendication 2 caractérisé en ce que chaque fenêtre possède un nombre maximum déterminé de champs (C₀ à C₂₂) identifié chacun par un libellé de largeur maximale prédéterminée, trois types d'actions pouvant être associées à chacun de ces champs :
- l'appel d'une autre fenêtre, identifiée par un numéro déterminé compris entre 1 et n,
- l'appel d'une fonction identifiée par un indice donné, mis en oeuvre par un programme particulier appartenant au troisième niveau N₃,
- la définition d'une donnée ayant une largeur maximale connue d'avance.

5. Système de test (ST) selon la revendication 4 caractérisé en ce que pour exécuter une commande déterminée définie par le niveau N₂, 3 fenêtres sont nécessaires :
a) une fenêtre dite du "CORPS DE COMMANDE" contenant le message de commande destiné à être envoyé au coupleur de communication (FDIT) par l'unité de traitement de données (PC),
b) une fenêtre dite "CHAMP" indiquant le nombre de champs de la réponse attendue,
c) une fenêtre dite "FORMAT" décrivant le format d'affichage des différents champs de la réponse sur ledit dispositif de visualisation (VD),

6. Système de test (ST) selon la revendication 4 caractèrisé en ce qu'il comprend notamment une commande destinée à placer le coupleur de communication dans différentes configurations de tests, une partie de ces tests étant de type fonctionnel, c'est à dire permettant de vérifier le bon fonctionnement du coupleur de communication ou de tout autre coupleur de communication appartenant à toute autre station connectée à ce réseau autre que le coupleur de communication relié à l'unité de traitement de données, et une autre partie de type opérationnel consacrée à la génération de trafic sur ledit réseau.

7. Système de test (ST) selon la revendication 5 caractérisé en ce que les tests de type fonctionnel comprennent un premier test permettant de vérifier le bon fonctionnement de toute station connectée au réseau, ou du dit coupleur de communication (FDIT), pour la réception de trames définies par la norme FDDI,
- un second test permettant de vérifier le fonctionnement en émetteur de toute station connectée au réseau ou du dit coupleur de communication, la carte testée envoyant alors des trames de longueur déterminée, celles-ci étant envoyées sous formes de plusieurs blocs de trames transmises à un intervalle de temps déterminé.

8. Système de test selon la revendication 6 caractérisé en ce qu'il comprend un troisième test permettant de vérifier le bon fonctionnement de toute station connectée au réseau en lui envoyant de manière répétitive une trame de type asynchrone par le coupleur de communication (FDIT), ce coupleur vérifiant le bon état de la trame renvoyée par les autres stations en réponse à celles qu'il vient de leur envoyer.

## Patentansprüche

1. System (ST) zum Prüfen eines ringförmigen Netzes (RE) mit sehr hoher Übertragungsrate, mit:
- einer Einheit (PC) für die Verarbeitung von Daten, die mit einer Vorrichtung (VD) für die Anzeige dieser Daten versehen ist und über eine spezifische Verbindung (L) mit einem an das Netz angeschlossenen Kommunikationskoppler (FDIT) verbunden ist,
- einer Software zum Prüfen des Netzes (LOGT), die in der Einheit implementiert ist,
- einer Gruppe (ETF) von funktionalen Prüfungen, die wenigstens den Empfang von vom Netz kommenden Rahmen ermöglichen,
- einem Kommunikationskoppler (FDIT), der über eine Schnittstelle (IHT) an die spezifische Verbindung angeschlossen ist und einen Mikroprozessor (MP) enthält, der die Gruppe der funktionalen Prüfungen (ETF) ausführt und dem ein Steuerbus (BC) zugeordnet ist, der seinerseits einerseits mit der Schnittstelle (IHT) und andererseits mit einer Netzzugriff-Steuereinrichtung (CAR) verbunden ist, die physikalisch an das Netz angeschlossen ist,
- einem Bus mit hoher Übertragungsrate (BHD), der einerseits an die Schnittstelle (IHT) und anderseits an die Netzzugriff-Steuereinrichtung (CAR) angeschlossen ist,
- einem Hinterlegungsspeicher (MST), der an den Bus (BHD) mit hoher Übertragungsrate bzw. über eine Steuerleitung (LC) an die Netzzugriff-Steuereinrichtung (CAR) angeschlossen ist,
- wobei der Steuerbus Steuerzeichen bezüglich der Bildung von Rahmen transportiert, wobei der Bus mit hoher Übertragungsrate die Nutzdaten der Rahmen, die den Steuerzeichen entsprechen, transportiert und wobei der Mikroprozessor den Empfang und das Senden der Rahmen organisiert, die vom Netz kommen oder zum Netz laufen,
wobei die Prüf-Software (LOGT) einerseits den Kommunikationskoppler steuert, indem sie an ihn Befehle schickt, die die Ausführung der Gruppe von Prüfungen ermöglichen, und andererseits die Anzeige der Informationen bezüglich des Zustands des Netzes steuert, die vom Koppler empfangen und von diesem letzteren zur Verarbeitungseinheit geschickt werden,
dadurch gekennzeichnet, daß die Gruppe (ETF) von funktionalen Prüfungen, die im Kommunikationskoppler enthalten ist, ermöglicht, nach dem Schicken von Befehlen durch die Datenverarbeitungseinheit (PC) einen Verkehr im Netz (RE) durch Senden von Rahmen der Typen, die gemäß den im Netz verwendeten Normen im voraus definiert sind, zu erzeugen, vom Netz kommende Rahmen der im voraus definierten Typen zu empfangen, um deren Inhalt auf der Anzeigevorrichtung anzuzeigen, sowie Rahmen der im voraus definierten Typen wiederholend oder nicht wiederholend zu empfangen und zurückzusenden,
- wobei die Schnittstelle (IHT) an die Leitung (L) über eine Steckkarte (CB) und einen Befehlsspeicher (MC) angeschlossen ist, wobei die Steckkarte Mittel (F1 bis Fn, A1 bis An) enthält, um den Bus (BHD) mit hoher Übertragungsrate zu sich selbst zurückzuschleifen, derart, daß jeder vom Netz kommende Datenrahmen zunächst zu diesem Bus zurückgeschickt wird und dann in den Hinterlegungsspeicher (MST) geschickt wird, wobei der Speicher (MC) die Umsetzung zwischen dem Übertragungsmodus auf der spezifischen Leitung (L) und demjenigen, der auf dem Bus (BHD) mit hoher Übertragungsrate verwendet wird, ermöglicht.

2. System nach Anspruch 1, dadurch gekennzeichnet, daß die Netzprüfungs-Software (LOGT) um einen Fenstergenerator (GF) formuliert ist, der eine Mehrzahl n von Fenstern F₁ bis Fₙ erzeugt und wenigstens drei Ebenen N₁ bis N₃ enthält, wobei die erste Ebene N₁ das Skelett (SQ) des Programms definiert, das insbesondere die Konstruktion der verschiedenen Fenster ermöglicht,
wobei die zweite Ebene N₂ die verschiedenen Befehle, die von der Datenverarbeitungseinheit (PC) oder von jeder anderen Station des Netzes zu den anderen Stationen des Netzes geschickt werden können, und andererseits die Struktur der empfangenen Antworten auf diese verschiedenen Befehle beschreibt,
wobei die dritte Ebene N₃ im voraus definierte Funktionen ausführt, die insbesondere die Anzeige des gesamten Netzes RE auf der Anzeigevorrichtung sowie die Anzeige dessen ermöglichen, was innerhalb jedes Kommunikationskopplers geschieht, der zu einer an dieses Netz angeschlossenen Station gehört.

3. Prüfsystem (ST) nach einem der Ansprüche 1, 2, dadurch gekennzeichnet, daß das Netz (RE) die Form eines doppelten Rings des Typs FDDI (Fiber Distributed Data Interface) besitzt.

4. Prüfsystem (ST) nach Anspruch 2, dadurch gekennzeichnet, daß jedes Fenster eine bestimmte maximale Anzahl von Feldern (C₀ bis C₂₂) besitzt, wovon jedes durch ein Etikett mit vorgegebener maximaler Breite gekennzeichnet ist, wobei jedem dieser Felder drei Typen von Aktionen zugeordnet werden können:
- Aufruf eines anderen Fensters, das durch eine bestimmte Nummer, die zwischen 1 und n liegt, gekennzeichnet ist,
- Aufruf einer Funktion, die durch einen gegebenen Index gekennzeichnet ist und durch ein besonderes Programm ausgeführt wird, das zur dritten Ebene N₃ gehört,
- Definition einer Dateneinheit, die eine im voraus bekannte maximale Breite besitzt.

5. Prüfsystem (ST) nach Anspruch 4, dadurch gekennzeichnet, daß für die Ausführung eines durch die Ebene N₂ definierten, bestimmten Befehls drei Fenster notwendig sind:
a) ein sogenanntes "BEFEHLSKÖRPER"-Fenster, das die Befehlsnachricht enthält, die dazu bestimmt ist, durch die Datenverarbeitungseinheit (PC) zum Kommunikationskoppler (FDIT) geschickt zu werden,
b) ein sogenanntes "FELD"-Fenster, das die Anzahl der Felder der erwarteten Antwort angibt,
c) ein sogenanntes "FORMAT"-Fenster, das das Anzeigeformat der verschiedenen Felder der Antwort auf der Anzeigevorrichtung (VD) beschreibt.

6. Prüfsystem (ST) nach Anspruch 4, dadurch gekennzeichnet, daß es insbesondere einen Befehl enthält, der dazu bestimmt ist, den Kommunikationskoppler in verschiedene Prüfkonfigurationen zu versetzen, wobei ein Teil dieser Prüfungen funktionaler Art sind, d. h. die die Verifikation der richtigen Funktion des Kommunikationskopplers oder aller anderen zu allen anderen an dieses Netz angeschlossenen Stationen gehörenden Kommunikationskoppler mit Ausnahme des mit der Datenverarbeitungseinheit verbundenen Kommunikationskopplers ermöglichen, und wobei ein anderer Teil vom operationalen Typ ist, der der Erzeugung des Verkehrs im Netz gewidmet ist.

7. Prüfsystem (ST) nach Anspruch 5, dadurch gekennzeichnet, daß die Prüfungen des funktionalen Typs eine erste Prüfung, die die Verifikation der richtigen Funktion jeder an das Netz angeschlossenen Station oder des Kommunikationskopplers (FDIT) für den Empfang von durch die FDDI-Norm definierten Rahmen ermöglicht, sowie eine zweite Prüfung umfassen, die die Verifikation des Sendebetriebs jeder an das Netz angeschlossenen Station oder des Kommunikationskopplers ermöglicht, wobei die geprüfte Karte dann Rahmen bestimmter Länge schickt, die in Form mehrerer Blöcke von Rahmen geschickt werden, welche in einem bestimmten Zeitintervall übertragen werden.

8. Prüfsystem nach Anspruch 6, dadurch gekennzeichnet, daß es eine dritte Prüfung umfaßt, die die Verifikation des richtigen Betriebs jeder an das Netz angeschlossenen Station ermöglicht, indem sie an sie durch den Kommunikationskoppler (FDIT) wiederholt einen Rahmen des asynchronen Typs schickt, wobei dieser Koppler den richtigen Zustand des Rahmens verifiziert, der von den anderen Stationen als Antwort auf jene, die er eben an sie geschickt hat, zurückgeschickt wird.

## Claims

1. A system (ST) for testing a very high throughput ring network (RE), comprising:
- a unit for processing data (PC) provided with a device for displaying the same (VD) connected via a specific line (L) to a communication coupler (FDIT) connected to the network,
- software for testing the network (LOGT) implemented in said unit,
- a set (ETF) of functional tests allowing at least the reception of frames coming from the network,
- a communication coupler (FDIT) connected to the specific line via an interface (IHT) and comprising a microprocessor (MP) which implements the set of functional tests (ETF) and is associated with a control bus (BC), itself connected on the one hand to the interface (IHT) and on the other hand to a network-access controller (CAR), physically connected to the network,
- a high throughput bus (BHD) connected on the one hand to said interface (IHT) and on the other hand to the network-access controller (CAR),
- a storage memory (MST) connected respectively to the high throughput bus (BHD) and to the network-access controller (CAR) via a control line (LC),
- the control bus transporting the control characters relating to the constitution of frames, the high throughput bus transporting the effective data of the frames corresponding to the control characters, the microprocessor organising the reception and transmission of the frames coming from or going to the network,
the test software (LOGT) driving on the one hand the communication coupler by sending it commands allowing the implementation of said set of tests and on the other hand the display of information relating to the state of the network, as received by the coupler and sent by the latter to the processing unit,
characterised in that the set (ETF) of functional tests being introduced in the communication coupler permits, following the sending of commands by the data processing unit (PC), the production of traffic on the network (RE) by transmission of frames of predefined types conforming with the standards used on said network, the reception of frames of predefined types coming from the network with a view to their content being displayed on said display device, the reception and retransmission of frames of predefined types, repetitively or otherwise,
- the interface (IHT) being connected to the line (L) via a plug board (CB) and a control memory (MC), the plug board comprising means (F₁ to Fₙ, A₁ to Aₙ) for looping back the high throughput bus (BHD) on itself, so that every data frame coming from the network is sent back first to this same bus then to the storage memory (MST), the memory (MC) allowing the conversion to be made between the transmission mode on the specific line (L) and that used on the high throughput bus (BHD).

2. A system according to one of Claims 1, characterised in that the software (LOGT) for testing the network is centred around a windows generator (GF) generating a plurality n of windows F₁ to Fₙ, and comprises at least three levels N₁ to N₃,
the first level N₁ defining the skeleton (SQ) of the program which in particular allows the different windows to be constructed,
the second level N₂ describing the different commands capable of being sent by the data processing unit (PC), or by any other station on the network, to the other stations on the network, and on the other hand the structure of the responses received to these different commands,
the third level N₃ executing the predefined functions permitting in particular the display on said display device of the whole network RE, and also the display of what takes place inside every communication coupler belonging to a station connected to this network.

3. A test system (ST) according to one of Claims 1, 2, characterised in that the network (RE) is in the form of a double ring of FDDI (Fibre Distributed Data Interface) type.

4. A test system (ST) according to Claim 2 characterised in that each window has a predetermined maximum number of fields C₀ to C₂₂) each identified by a label of a predetermined maximum width, it being possible to associate three types of action with each of these fields:
- the calling up of another window, identified by a given number between 1 and n,
- the calling up of a function identified by a given code, instituted by a particular program belonging to the third level N₃,
- the definition of a datum having a maximum width known in advance.

5. A test system (ST) according to Claim 4 characterised in that, in order to execute a given command defined by level N₂, three windows are necessary:
a) a window known as the "COMMAND TEXT" containing the command message-intended to be sent to the communication coupler (FDIT) by the data processing unit (PC),
b) a window known as "FIELD" indicating the number of fields in the expected response,
c) a window known as "FORMAT" describing the format in which the various fields of the response are displayed on said display device (VD).

6. A test system (ST) according to Claim 4 characterised in that it comprises in particular a command intended to place the communication coupler in different test configurations, a part of these tests being of functional type, that is, making it possible to check the correct functioning of the communication coupler, or any other communication coupler belonging to any other station connected to this network other than the communication coupler linked to the data processing unit, and another part being of operational type dedicated to the generation of traffic on said network.

7. A test system (ST) according to Claim 5 characterised in that the tests of functional type comprise a first test making it possible to check the correct functioning of any station connected to the network, or of said communication coupler (FDIT), for the reception of frames defined by the FDDI standard - a second test making it possible to check the functioning as a transmitter of any station connected to the network or of said communication coupler, the board being tested then sending frames of a predetermined length, these being sent in the form of several blocks of frames transmitted at a given time interval.

8. A test system according to Claim 6 characterised in that it comprises a third test making it possible to check the correct functioning of any station connected to the network by sending it repetitively a frame of asynchronous type via the communication coupler (FDIT), this coupler checking the good condition of the frame sent back by the other stations in response to those it has just sent them.
